# EUROPÄISCHE PATENTSCHRIFT

(11) **EP 0 668 187 B1**
(45) Veröffentlichungstag und Bekanntmachung des Hinweises auf die Patenterteilung: **15.10.1997**
(21) Anmeldenummer: 94117299.1
(22) Anmeldetag: 03.11.1994
(51) Int. Cl.: B60R 5/04

(54) **Abdeckrollo für Kombi-Personenkraftfahrzeuge**
Roller blind for station car
Rideau écran pour break

(30) Priorität: 19.02.1994 DE 4405280
(43) Veröffentlichungstag der Anmeldung: 23.08.1995
(73) Patentinhaber: Baumeister & Ostler GmbH & Co., 73773 Aichwald (DE)
(72) Erfinder: Ament, Eduard, D-73773 Aichwald (DE); Seel, Holger, D-71134 Aidlingen (DE)
(74) Vertreter: Patentanwälte Rüger, Barthelt & Abel

(56) Entgegenhaltungen:
- DE-A- 3 922 450
- FR-A- 2 439 105
- US-A- 4 168 094

## Beschreibung

Aus der DE-PS 3922450 ist ein gattungsbildendes Abdeckrollo für Kombi-PKW bekannt. Dieses Abdeckrollo weist ein längliches starres Gehäuse auf, in dem eine Wickelwelle drehbar gelagert ist. An der Wickelwelle ist mit einer Kante die Rollobahn befestigt, die durch einen Auslauf- oder Tuchschlitzschlitz in dem länglichen Gehäuse nach außen führt. Ein mit der Wickelwelle zusammenwirkender Federmotor ist ständig bestrebt, die Rollobahn auf die Wickelwelle aufzuwickeln.

In den starren Endstücken des Gehäuses ist je ein Verriegelungsschieber gelagert, der mittels einer Feder in die aus dem Gehäuse vorgeschobene Verriegelungsstellung vorgespannt ist und mit Hilfe eines Betätigungsknopfes in das Gehäuse des Abdeckrollos zurückgedrückt werden kann.

Das bekannte Abdeckrollo ist aus dem Laderaum des Kombi-PKW entnehmbar der zur Befestigung des Abdeckrollos hinter der Rücksitzlehne und unterhalb der hinteren Seitenfenster in der Karosserie entsprechende Taschen enthält, in die das Abdeckrollo von oben her einsetzbar ist. Im eingesetzten Zustand greifen die Schieher der Verriegelungseinrichtung in entsprechende kleine Ausnehmungen in den Taschen ein und sichern so das Abdeckrollo gegen unerwünschtes Herausspringen nach oben.

Wegen der starren Endstücke erfolgt bei dem bekannten Abdeckrollo praktisch keine automatische Zentrierung, die in der Lage ist, seitliche Toleranzen in der Karosserie auszugleichen. Vielmehr ist wegen der Toleranzen das Gehäuse nach einer Seite verschoben, so daß bei ausgezogener Rollobahn die zwischen der Rollobahn und den Karosserieteilen auftretenden Spalte links und rechts unterschiedlich groß sind. Da möglichst schmale Spalte angestrebt werden, ist eine Breitenabweichung der Spalte besonders augenfällig.

Aus der US-PS 4480675 ist ein Abdeckrollo für Laderäume von PKW bekannt, das kein äußeres Gehäuse aufweist. Die Rollobahn dieses Rollos ist etwa in der Mitte mit der Wickelwelle verbunden, damit, wenn die Wickelwelle durch den Federmotor in Umdrehungen versetzt wird, beide Enden der Rollobahn sich gleichzeitig auf die Wickelwelle zu bewegen. Um das Reaktionsmoment des Federmotors aufzunehmen, wird die Wickelwelle endseitig von becherförmigen Kappen übergriffen, die mit Fortsätzen in entsprechenden Führungsschienen des PKW geführt sind. Um dieses Rollo aus den Führungsschienen entnehmen zu können bzw. Breitentoleranzen ausgleichen zu können, sind die Kappen gegenüber der Wickelwelle axial abgefedert und können gegen die Wirkung der Feder aufeinander zu bewegt werden, um das Rollo aus den Führungsschienen aushängen zu können.

Der Hub für die stirnseitigen Kappen muß dabei so groß sein, daß er ausreicht, das Rollo aushängen zu können, wenn die lichten Maße der Karosserie an der unteren Toleranzgrenze liegen. Dementsprechend sind die in den Kappen vorhandenen Schlitze für die Rollobahn verhältnismäßig sehr lang. Außerdem verschmälert sich naturgemäß die mögliche Breite der Rollobahn, da zu dem erforderlichen Hub wegen der Toleranz noch der Hub zum Aushängen hinzukommt. Die Spaltweite zwischen der ausgezogenen Rollobahn und den benachbarten Karosserieteilen ist entsprechend unerwünscht groß.

Ausgehend hiervon ist es Aufgabe der Erfindung, ein selbstzentrierendes Andeckrollo zu schaffen, das möglichst kleine seitliche Spalte zwischen der Rollobahn und der Karosserie ermöglicht, wenn die Rollobahn ausgezogen ist.

Diese Aufgabe wird erfindungsgemäß durch das Abdeckrollo mit den kennzeichnenden Merkmalen des Anspruchs 1 gelöst.

Weil bei dem neuen Rollo an dem Gehäuse Endstücke vorgesehen sind, die gegenüber dem Gehäuse einerseits beweglich und andererseits mittels Federeinrichtungen abgestützt sind, zentriert sich der die Wickelwelle enthaltende Teil des Gehäuses selbsttätig im eingesetzten Zustand innerhalb des Laderaums. Gleichzeitig kann eine maximal breite Rollobahn verwendet werden, weil die Breite der Rollobahn nicht so bemessen werden muß, daß gleichzeitig die zum Aushängen des Rollos erforderliche Bewegungsfreiheit der Endstücke gegeben ist. Das Ein- und Ausrasten bzw. das Fixieren des Gehäuses des neuen Abdeckrollos geschieht vielmehr mit Hilfe der getrennt beweglichen Verriegelungsglieder, die in den Endstücken sitzen und deswegen immer in eine optimale Stellung gebracht werden.

Um Beschädigungen der Kanten der Rollobahn zu vermeiden, ist es zweckmäßig, wenn den beiden Endstellungen für die Endstücke jeweils Anschläge zugeordnet sind. Dadurch wird einerseits ein unnötig weites Herausdrücken der Endstücke mit der Folge einer schwierigen Handhabung beim Einsetzen vermieden und andererseits die Kantenbeschädigung, wie ausgeführt, ausgeschlossen.

Eine optisch ansprechende und wenig Platz beanspruchende Lösung wird erhalten, wenn die Endstücke die Gestalt von becherförmigen Kappen haben, die das Zwischenstück des Gehäuses von außen her übergreifen.

Eine gute Abfederung der Endstücke, die auch die Rotation der Wickelwelle und deren Lagerung nicht beeinträchtigt, wird erreicht, wenn sich die Federeinrichtungen in dem Zwischenstück des Gehäuses abstützen, während andererseits sich die Federeinrichtungen für die Verriegelungsglieder in den Endstücken abstützen.

Wenn die Bewegungsrichtung der Verriegelungsglieder in Richtung parallel zu der Wickelwelle erfolgt, ist zweckmäßigerweise die von der Federeinrichtung für die Endstücke aufgebrachte Kraft größer als die von den Federeinrichtungen für die Verriegelungsglieder aufgebrachte Kraft, so daß die Endstücke immer sicher in den entsprechenden Taschen in den Kraftfahrzeug anliegen. Bei der anderen Ausführungsform, bei der die Verriegelungsglieder quer zu der Längsachse der Wickelwelle beweglich sind, muß diese Bemessungsregel nicht eingehalten werden.

Wenn die Verriegelungsglieder quer zu der Längsachse der Wickelwelle beweglich sind, werden sie zweckmäßigerweise von Hebeln gebildet, die um eine zu der Wickelwelle parallele Schwenkachse drehbar sind.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
- Fig. 1: ein erfindungsgemäßes Abdeckrollo, teilweise ausgezogen, in dem Kofferraum eines Personenkraftwagens in einer perspektivischen Darstellung,
- Fig. 2: das Gehäuse des Abdeckrollos nach Fig. 1 im abgebrochenen Zustand und im Längsschnitt vor dem Einrasten in die Aufnahmetaschen des Kraftfahrzeuges,
- Fig. 3: das in Fig. 2 gezeigte Ende des Gehäuses in einer aufgebrochenen perspektivischen Darstellung,
- Fig. 4 und 5: eine andere Ausführungsform zur Betätigung des Verriegelungsgliedes des Abdeckrollos nach Fig. 1, teilweise geschnitten bzw. in perspektivischer Darstellung und
- Fig. 6: eine andere Ausführungsform zur Verriegelung des Abdeckrollos nach Fig. 1 mit den zugehörigen Aufnahmetaschen des PKW.

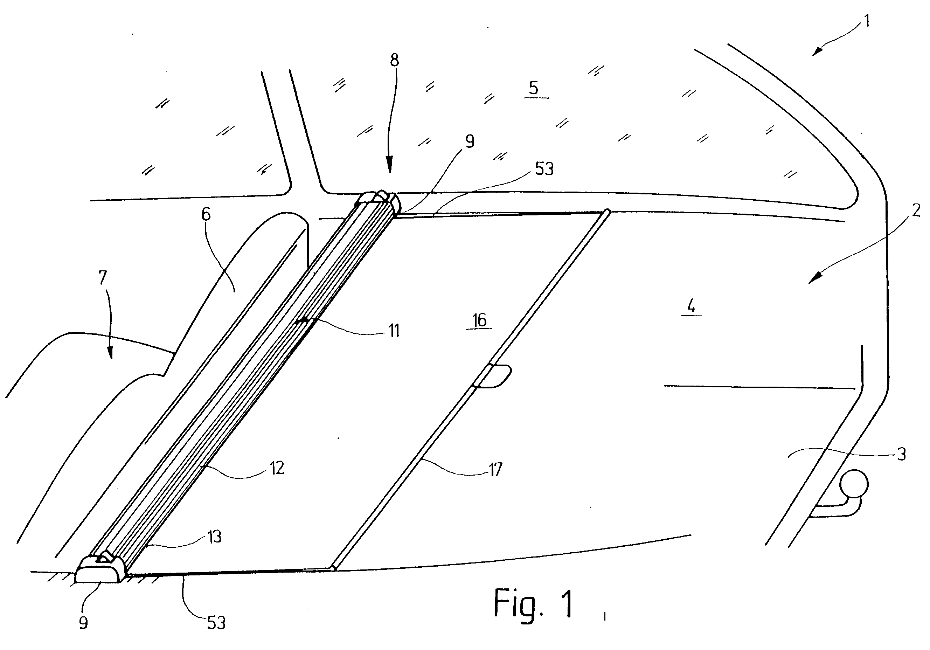

In Fig. 1 ist die aufgebrochen dargestellte Heckpartie 1 eines Kombiwagens oder Personenkraftwagens perspektivisch veranschaulicht, dessen Laderaum 2 von einem Boden 3 sowie zwei Seitenwänden begrenzt ist, von denen nur die rechte Seitenwand 4 erkennbar ist. Über der Seitenwand 4 befindet sich ein hinteres Seitenfenster 5, während den vorderen Abschluß des Laderaums 2 eine Rücksitzlehne 6 einer Rücksitzbank 7 bildet.

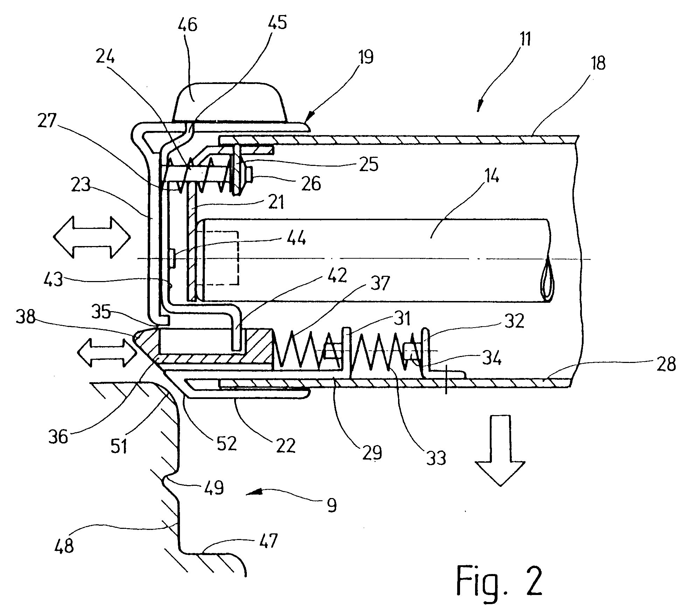

Zum Abdecken des Laderaums 2 ist ein Abdeckrollo 8 vorgesehen, das sich knapp unterhalb der Unterkante des heckseitigen Seitenfensters 5 und etwa auf Höhe der Oberkante der Rücksitzlehne 6 befindet. Das Abdeckrollo 8 steckt in zwei miteinander fluchtenden Aufnahmetaschen 9, die unterhalb der Seitenfenster 5 und knapp hinter der Rückseite der Rücksitzlehne 6 in den Seitenwänden vorgesehen sind. Die Aufnahmetaschen 9 stellen Ausnehmungen dar, die auch aufeinander zu gerichtet offen sind. Das Abdeckrollo 8 weist ein längliches und, wie die übrigen Figuren erkennen lassen, ein im Querschnitt etwa quadratisches Gehäuse 11 auf, das auf seiner von der Rücksitzlehne 6 weggerichteten Seitenfläche 12 mit einem Tuchschlitz 13 versehen ist, der sich praktisch über die gesamte Länge des Gehäuses 11 erstreckt. Im Inneren des Gehäuses 11 ist eine Wickelwelle 14 (Fig. 2) drehbar gelagert, die über eine nicht veranschaulichte Wickelfeder, die als Federmotor dient, in eine Richtung vorgespannt ist. Die Wickelfeder ist hierzu einenends mit der Wickelwelle 14 und anderenends mit dem Gehäuse 11 verbunden und dient dazu, der Wickelwelle 14 ein Drehmoment im Sinne des Einfahrens einer Rollobahn 16 zu erteilen, die mit einer Kante an der Wickelwelle 14 befestigt ist. Die Rollobahn 16 läuft durch den Tuchschlitz 13 hindurch und trägt an ihrer anderen, zu der Wickelwelle 14 parallelen Kante eine Zugstange 17 zur Bedienung des Abdeckrollos 8, wenn die Rollobahn 16, die in Fig. 1 teilweise herausgezogen veranschaulicht ist, vollständig ausgefahren wird, um den Koffer- oder Laderaum 2 nach oben abzudecken.

Das Gehäuse 11 besteht, wie der Längsschnitt gemäß Fig. 2 zeigt, aus einem länglichen, rohrförmigen Zwischenstück 18 mit durchgehenden, im wesentlichen konstantem etwa rechteckigen Querschnitt sowie zwei an den beiden Enden angeordneten Endstücken 19 in Gestalt becherartiger Endkappen. In Fig. 2 ist aus Darstellungsgründen lediglich eine der beiden Endkappen 19 gezeigt. Die andere Endkappe 19 ist spiegelbildlich, so daß die nachstehend gegebene Beschreibung auch für die andere Endkappe 19 gilt.

In der Nähe der Enden des rohrförmigen Zwischenstückes 11 sind an dessen Innenseite zwei nach unten ragende Laschen 21 befestigt, die den gehäuseseitigen Lagerteilen zur drehbaren Lagerung der Wickelwelle 14 dienen und gleichzeitig das Reaktionsmoment der nicht gezeigten Wickelfeder aufnehmen. Das Drehmoment wird über die drehfeste Verbindung der Endkappen 19 mit dem Zwischenstück 18 auf die Endkappen 19 übertragen.

Die Endkappe 19 besteht aus einem dem Querschnitt des Zwischenstücks 18 angepaßten äußeren Kragen 22, der einstückig in eine das Gehäuse 11 nach außen zu abschließende Seitenwand 23 übergeht. Mit dem Kragen 22 übergreift die Endkappe 19 von außen her das Zwischenstück 18 und dieser enthält einen mit dem Tuchschlitz 13 fluchtenden Schlitz, der wegen der Darstellungsart nicht sichtbar ist.

An der dem Zwischenstück 18 zugekehrten Innenseite der Wand 23 ist oben ein zylindrischer Zapfen 24 angeformt, der parallel zu der Achse der Wickelwelle 14 verläuft und in das Zwischenstück 18 hereinragt. Der Zapfen 24 wirkt mit einer Lasche 25 zusammen, die in der Nähe des Endes an dem Zwischenstück 18 befestigt ist und eine Durchgangsbohrung enthält, durch die der zylindrische Zapfen 24 hindurchführt. Das durch die Lasche 25 hindurchreichende Ende des Zapfens 24 trägt eine Sicherungsfeder 26, die nach der Montage verhindert, daß dem zylindrische Zapfen 24 aus der Lasche 25 nach außen herausgezogen werden kann.

Mittels einer auf dem Zapfen 24 angeordneten Schraubenfeder 27 ist die Endkappe 19 in Richtung von dem Zwischenstück 18 weg, also nach außen, in eine äußere Endstellung zu vorgespannt, so weit, bis die Sicherungsfeder 26 an der Rückseite der Lasche 25 anliegt.

Das Zwischenstück 18 des Gehäuses 11 weist einen im wesentlichen ebenen Boden 28 auf, über dem knapp darüber eine an der Wand 23 angeformte Lasche 29 verläuft, die an ihrem in dem Zwischenstück 18 liegenden Ende in eine nach oben aufragende Lasche 31 übergeht. Zwischen dieser Lasche 31 und einer im Abstand dazu weiter nach innen in dem Zwischenstück 18 angeordneten weiteren Anschlaglasche 32 erstreckt sich eine weitere Druckfeder 33, die in dem gleichen Sinne wirkt wie die Druckfeder 27 und ebenfalls bestrebt ist, die Endkappe 19 in die äußere Endlage vorzuschieben. Ein auf der Lasche 32 vorgesehener zylindrischer Bolzen 34 verhindert ein Herunterspringen der Druckfeder 33.

Aufgrund dieser Anordnung ist die Endkappe 19 zwischen zwei Endlagen hin- und her verschiebbar, von denen die eine in Fig. 2 gezeigt ist und die dadurch gekennzeichnet ist, daß die Sicherungsfeder 26 an der Lasche 31 anliegt, während die andere Endstellung durch Eindrücken der Endkappe 19 in Richtung auf das Zwischenstück 18 erreicht wird, bis beispielsweise die Innenseite der Wand 23 an der Lagerlasche 21 anliegt.

Oberhalb der Lasche 29 und an diese unmittelbar angegrenzend enthält die Kappe 19 in der Wand 23 eine rechteckige Öffnung 35, in der ein etwa quader- oder klotzförmiges Verriegelungsglied in Gestalt eines Schiebers 36 längsverschieblich geführt ist. Die nicht weiter veranschaulichten Führungseinrichtungen für den Verriegelungsschieber 36 führen diesen innerhalb der Kappe 19 in Richtung parallel zu der Längsachse der Wickelwelle 14. Mittels einer weiteren schraubenförmigen Druckfeder 37, die an der innenliegenden Rückseite des Verriegelungsschiebers 36 anliegt und sich gegen die bezüglich der Kappe 19 feste Lasche 31 abstützt, wird der Verriegelungsschieber 36 in seine äußere Endlage vorgespannt, in der er mit seinem V-förmig zugespitzten Verriegelungsfortsatz oder -nase 38 außen über die Kappe 19 vorsteht.

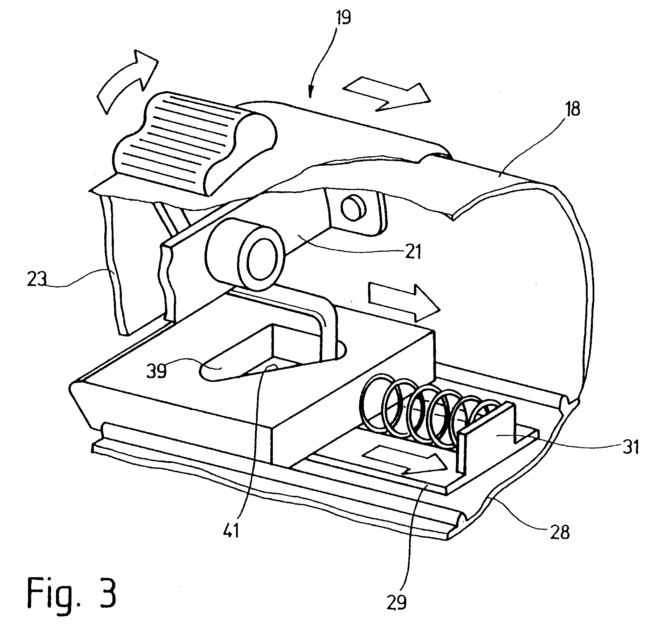

Um den Verriegelungsschieber 36 entgegen der Wirkung der Druckfeder 37 in die Endkappe 19 zurückzubewegen, ist in dem Verriegelungsschieber 36 eine eine Kulisse bildende Öffnung 39 mit einem Querschnitt entsprechend einem rechtwinkeligen Dreieck vorgesehen, die eine zu der Bewegungsrichtung des Verriegelungsschiebers 36 schräg verlaufende gerade Fläche 41 aufweist, die sich an demjenigen Ende der Öffnung 39 befindet, die von dem Verriegelungsfortsatz abliegt (siehe Fig. 3). In diese Öffnung 39 greift ein Ende 42 eines zweiarmigen Hebels 43 ein, der an der Innenseite der Wand 23 auf einem Lagerzapfen 44 drehbar gelagert ist. Das dem Hebelende 42 bezüglich des Lagerzapfens 44 gegenüberliegende Ende 45 steht durch einen entsprechenden Schlitz an der Oberseite des Kragens 22 der Endkappe 19 nach oben vor und trägt dort einen Betätigungsknopf 46.

Der Lagerzapfen 44 ist derart angeordnet, daß der Hebel 43 um eine zu der Wickelwelle 14 parallele Achse hin- und her schwenkbar ist, wobei er sich längs der Schrägfläche 41 bewegt.

Die bereits eingangs erwähnten Taschen 9, die seitlich in der Karosserie vorgesehen sind, werden an der Unterseite von einer Bodenfläche 47 begrenzt, die komplementär zu der Unterseite der Endkappe 19 ausgestaltet ist. Seitlich werden die Aufnahmetaschen 9 von einer im wesentlichen vertikal verlaufenden geraden Seitenwand 48 begrenzt, in der eine kleine Rastausnehmung 49 ausgebildet ist. Schließlich ist, um das Einführen des Abdeckrollos 8 zu erleichtern, die Seitenwand 48 an ihrer oberen Kante 51 abgeschrägt.

Die Handhabung des insoweit beschriebenen Abdeckrollos 8 geschieht wie folgt, wobei zunächst davon ausgegangen wird, daß das Abdeckrollo 8 nicht in dem PKW eingesetzt ist. In diesem Zustand hat die Wickelfeder dafür gesorgt, daß die Rollobahn 16 vollständig auf der Wickelwelle 14 aufgewickelt ist. Dabei wird das Aufwickeln dadurch begrenzt, daß die Zugstange 17 an den Rändern des Tuchschlitzes 13 anliegt, um ein vollständiges Einziehen der Rollobahn 16 zu verhindern.

Da keine seitlichen Kräfte auf das Gehäuse 11 einwirken, sind beide Endkappen 19 infolge der Wirkung der Druckfeder 27 und 33 in die äußere Endlage.

Das Abdeckrollo 8 kann in dieser Stellung von oben her in die beiden Aufnahmetaschen 9 eingesetzt werden, deren Querschnitt etwa dem Querschnitt der Endkappen 19 entspricht. Dabei gleitet eine entsprechend abgeschrägte Fläche 52 im Übergangsbereich zwischen der Seitenwand 23 und dem Kragen 22 längs der abgeschrägten Fläche 51 der betreffenden Tasche 9, wodurch die beiden Endkappen 19 entgegen der Wirkung der Druckfedern 27 und 33 weiter auf das Zwischenstück 18 aufgeschoben werden. Hierdurch ist es möglich, das Gehäuse 11 an beiden Enden in die Taschen 9 von oben her einzuschieben. Gleichzeitig damit wird durch die Schrägfläche 51 auch der an sich vorstehende Verriegelungsschieber 36 in der jeweiligen Endkappe 19 nach innen geschoben, ohne daß eine Betätigung der Betätigungsknöpfe 46 erforderlich ist, weil die Verriegelungsschieber frei nach hinten bzw innen zurückweichen können. Es genügt von oben her eine entsprechende Kraft auf dar Gehäuse 11 einwirken zu lassen.

Kurz bevor das Gehäuse 11 auf der Auflagefläche 47 in der betreffenden Tasche 9 zur Anlage kommt, greifen die zugespitzten Verriegelungsfortsätze 38 in die zugehörige Verriegelungsausnehmung 49 ein und drücken aufgrund entsprechend schräg liegender Flächen die Endkappen 19 vollends und klapperfrei gegen die Bodenfläche 47.

Damit ist das Abdeckrollo 8 vollständig eingesetzt und es kann nach Bedarf die Rollobahn 16 aus dem Gehäuse 11 herausgezogen werden, um das Gepäck in dem Kofferraum 2 abzudecken.

Da an beiden Seiten zwischen dem Zwischenstück 11 und den Endkappen 19 etwa gleich große Vorspannkräfte wirken, ist das Zwischenstück 18 recht genau zwischen den beiden Endkappen 19 zentriert. Folglich ist auch die in dem Zwischenstück 18 gelagerte Wickelwelle 14 zwischen den Seitenwänden 4 zentriert und bei ausgezogener Rollobahn 16 sind die sich zu beiden Seiten bildenden Spalte, wie sie in Fig. 1 bei 53 angedeutet sind, gleich groß.

Da im übrigen die Betätigungskraft durch die Druckfedern 27 und 33 größer ist als die Kraft, die die Druckfeder 37 auszuüben vermag, bleiben die Endkappen 19 mit ihren Wänden 23 satt an der Seitenwand 48 der Tasche 9 anliegend.

Zum Entnehmen des Abdeckrollos aus dem PKW werden an beiden Seiten des Gehäuses 11 die Betätigungsknöpfe 46 nach hinten verschoben, wodurch der damit verbundene zweiarmige Hebel 43 verschwenkt wird. Das entsprechende Ende 42 gleitet längs der Schrägfläche 41 und schiebt dadurch relativ zu der betreffenden Endkappe 19 den Verriegelungsschieber 36 nach innen, womit nun das Gehäuse 11 nach oben aus den Taschen 9 entnehmbar ist.

Auf Grund der beschriebenen Anordnung wird die zum Betätigen der Verriegelungsschieber 36 erforderliche Kraft nicht dadurch vergrößert, daß zu zentrieren des Abdeckrollos 8 zwischen den Aufnahmetaschen 9 eine Federkraft nötig ist, und zwar unabhängig davon wie groß diese letzgenannte Kraft ist.

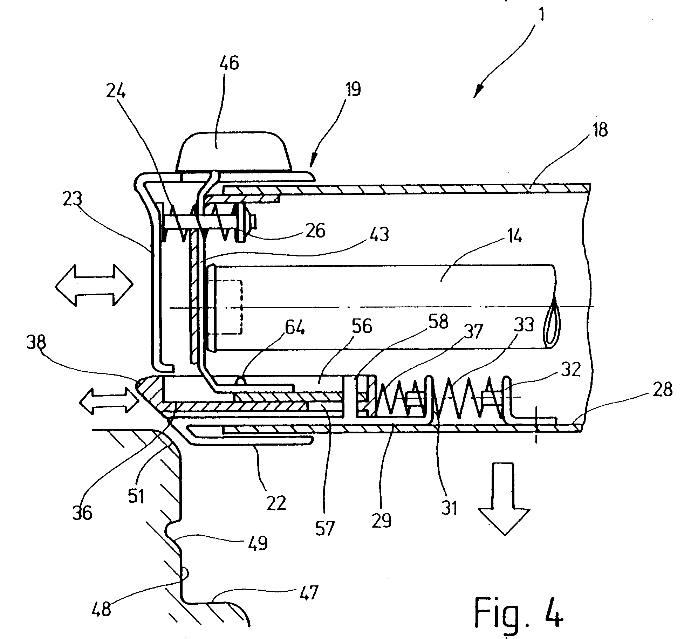

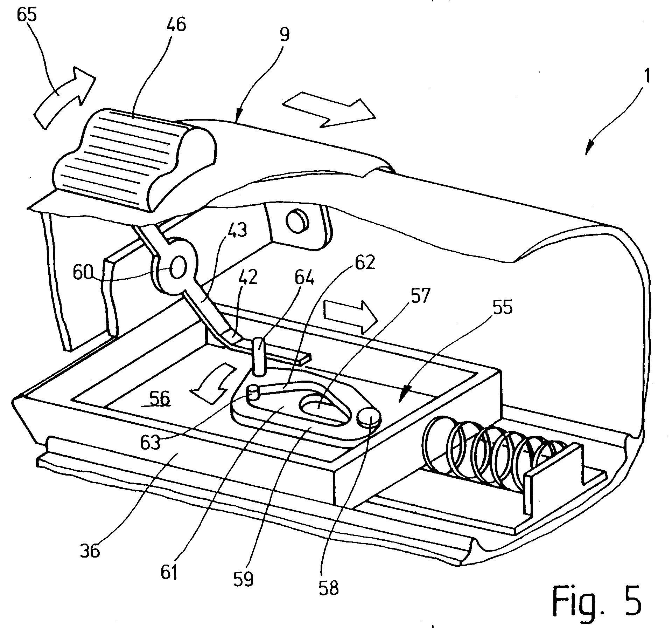

In den Fig. 4 und 5 ist ein Abdeckrollo 1 veranschaulicht, das sich von dem vorherigen Ausführungsbeispiel im wesentlichen nur durch eine Änderung der Kulissenmechanik zur Betätigung des Schiebers 36 unterscheidet. In den Fig. 4 und 5 wiederkehrende Teile aus den vorhergehenden Figuren sind deswegen nicht erneut beschrieben und mit denselben Bezugszeichen versehen.

Der Schieber 36 enthält in seiner Oberseite eine taschenförmige Ausnehmung 55 mit einem im wesentlichen planen Boden 56. In dem Boden 56 ist ein Langloch 57 enthalten, durch das ein auf der Lasche 29 aufragender Lagerzapfen 58 hindurchführt. Das Langloch 57 erstreckt sich parallel zu der Bewegungsrichtung des Schiebers 36.

Auf dem Lagerzapfen 58 sitzt schwenkbar eine Kulissenscheibe 59, die eine in der Draufsicht etwa dreieckförmige Öffnung 61 enthält. Eine Wand der Öffnung 61 bildet eine Schrägfläche 62, die schräg zu der Bewegungsrichtung des Schiebers 36 verläuft. Mit der Schrägfläche 62 wirkt ein Zapfen 63 zusammen, der auf dem Boden 56 nach oben zeigt, befestigt ist.

Ein weiterer Zapfen 64 ist auf der Kulissenscheibe 59 angebracht, und zwar an einer von der Schwenkachse gestaltetes Zapfens abliegenden Stelle. Mit diesem Zapfen 64 wirkt das entsprechend abgewinkelte Ende 42 des Hebels 43 zusammen, der im übrigen in der abweichend von dem vorigen Ausführungsbeispiel anstatt auf einen eigenen Zapfen auf einem Zapfen 60 zur Lagerung der Wickelwelle 14 gelagert ist.

Das Einsetzen des Abdeckrollos 1 gemäß den Fig. 4 und 5 geschieht in der gleichen Weise, wie dies bereits beschrieben ist. Beim Einsetzen gleiten die Endkappen 19 entsprechend weit auf das Zwischenstück 11 zurück und die Verriegelungsschieber 36 verschwinden mit ihrem vorstehenden Fortsatz 38 in den Endkappen 19. Bei dieser Bewegung des Verriegelungsschiebers 36 läuft der Zapfen 58 durch das Langloch 57. Nach Erreichen der Rastausnehmung 49 wird der Verriegelungsschieber 36 von der Feder 33 nach vorne in die Rastausnehmung 49 geschoben und das Abdeckrollo 1 ist in dem PKW klappersicher festgehalten.

Zum Entnehmen des Abdeckrollos 1 wird der Betätigungsknopf 56, wie dies durch einen Pfeil 65 angedeutet ist, bezogen auf die Zeichenebene von Fig. 5 nach hinten geschoben. Diese Bewegung führt zu einer Verschwenkung der Kulissenscheibe 59 im Gegenuhrzeigersinn bezüglich des Zapfens 58, da das Ende 42 des Hebels 43 den Zapfen 64 nach vorne auf den Betrachter zu verschiebt. Infolge dieser Schwenkbewegung läuft der auf dem Verriegelungsschieber 36 starr sitzende Zapfen 63 längs der Schrägfläche 62, was dazu führt, daß sich der Zapfen 58 und der Zapfen 63 aneinander annähern. Da einer der beiden Zapfen mit dem Verriegelungsschieber 36 starr verbunden ist, kommt hierdurch die notwendige Rückzugsbewegung des Verriegelungsschiebers 36 zustande, damit dessen Verriegelungsfortsatz 38 aus der Rastausnehmung 49 freikommen kann, um das Abdeckrollo 1 nach oben aus den entsprechenden Taschen 9 herauszunehmen.

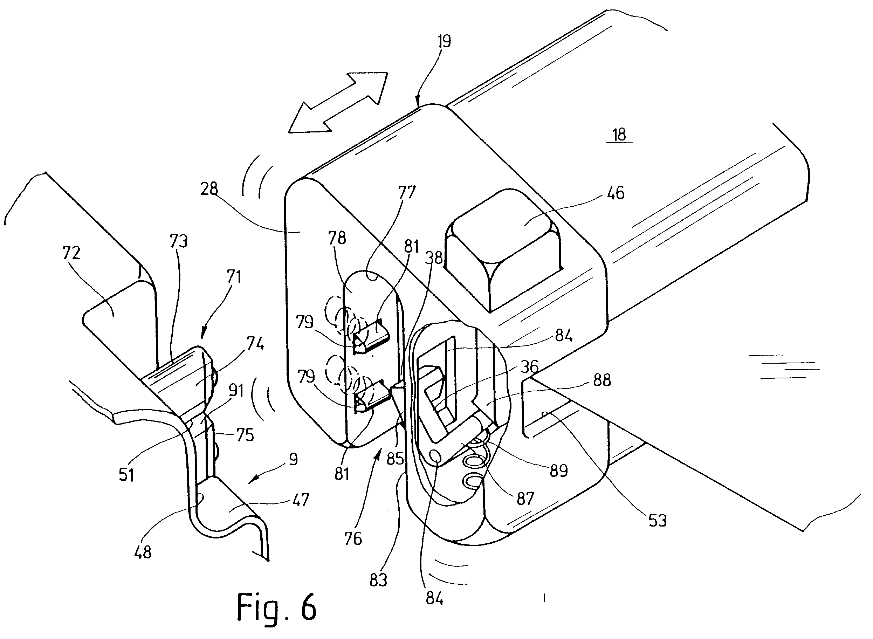

Fig. 6 zeigt schließlich eine Ausführungsform des Abdeckrollos 1, bei dem die Halterung und Fixierung nicht in einer Tasche 9, sondern vielmehr auf eher Rippe 71 erfolgt. Bereits beschriebene Teile oder funktionsmäßig einander entsprechende Teile sind in Fig. 5 mit den Bezugszeichen aus den vorhergehenden Figuren versehen.

Bei der Ausführungsform nach Fig. 5 ist von der Aufnahmetasche 9 lediglich noch deren Bodenfläche 47, die Seitenwand 48, die im wesentlichen senkrecht zu der Achse der Wickelwelle 14 verläuft, sowie eine Rückwand 72 vorhanden. In einem entsprechenden Abstand von der Rückwand 72 steht aus der Seitenwand 48 die Rippe 71 vor, die von der Auflagefläche 47 ausgeht und knapp oberhalb des oberen Randes der Aufnahmetasche 9 an einer Kante 73 endet. Die Rippe 73 wird dadurch im wesentlichen durch zwei etwa zu der Achse der Wickelwelle 11 parallele Flächen 74, von denen in der Figur aus Darstellungsgründen lediglich eine sichtbar ist, sowie eine Fläche 75 begrenzt, die etwa rechtwinklig zu der Längsachse der Wickelwelle 14 ausgerichtet ist.

Die Endkappe 19 enthält in der Seitenwand 28 eine zu der Rippe 71 komplementäre, von unten her in die Endkappe 19 etwa taschenförmige Nut 76, die an ihrem oberen Ende durch eine Stirnwand 77 abgeschlossen ist.

Durch zwei in einer rückwärtigen Seitenwand 78 der Nut 76 enthaltene Öffnungen 79 ragen zwei verschieblich geführte Andruckglieder 81 in die Nut 76 vor.

Eine vordere Seitenwand 83 der Nut 76 enthält eine weitere rechteckige Öffnung 84, in der ein Verriegelungsglied, diesmal in Gestalt eines zweiarmigen Hebels 36, schwenkbar gelagert ist. Der Hebel 36 ist ein Winkelhebel und steckt auf einem in der Kappe 19 ortsfesten Schwenkzapfen 84, der parallel zu der Längsachse der Wickelwelle 14 liegt. Ein Schenkel des Hebels 36, der Schenkel 85, ragt durch die Öffnung 84 hindurch und trägt die Rastnase 38, während der andere Schenkel 87 etwa unter 45° nach oben steht und mit seinem freien Ende mit einer nach unten ragenden Verlängerung 88 des Betätigungsknopfes 46 zusammenwirkt. Mittels einer Schraubenfeder 89 ist der Hebel 36 in eine Stellung vorgespannt, in der seine Rastnase 85 durch die Öffnung 84 hindurch in die Nut 76 hineinragt.

Die Handhabung des Abdeckrollos 1 nach Fig. 6 ist wie folgt :

Das Einsetzen geschieht wie bei den vorherigen Ausführungsbeispielen von oben, wobei der Abstand der Seitenwände 48 der Aufnahmetaschen 9 etwas kleiner ist als der Abstand der Seitenwände 28, wenn sich die beiden Endkappen 19 in ihren nach außen vorgeschobenen Endstellungen befinden. Infolge der Abrundung 51 werden beim Eindrücken des Abdeckrollos 1 von oben her in die Aufnahmetaschen 9 die Endkappe 19 ein Stück weit zurückgedrückt, so daß ihr Abstand dem Abstand der Seitenflächen 48 entspricht. Dabei gelangt gleichzeitig die Rippe 71 in die Nut 76. Hierbei werden einerseits die Rastfortsätze 38 als auch andererseits die Andruckglieder 81 aus der Nut 76 entsprechend zurückgedrückt. Gegen Ende der Einsetzbewegung stößt die Oberkante 73 der Rippe 71 an der Stirnwand 77 an und gleichzeitig rastet die Rastnase 38 in eine entsprechende ihr gegenüberliegende Rastausnehmung 91 der Rippe 71 ein.

Zum Entnehmen des Abdeckrollos 1 wird der Betätigungsknopf 46 niedergedrückt, wodurch der in Fig. 6 sichtbare Hebel 36, bezogen auf die Darstellungsform, im Uhrzeigersinne um seinen Lagerzapfen 84 geschwenkt wird. Dadurch kommt die Rastnase 38 aus der Rastausnehmung 91 frei und das Abdeckrollo 1 kann nach oben herausgenommen werden.

Da das Abdeckrollo 1 an beiden Stirnenden spiegelsymmetrisch ausgebildet ist, versteht es sich, daß eine entsprechende Betätigung auch des Druckknopfes 76 an dem anderen Ende erforderlich ist.

Wie bei den vorherigen Ausführungsbeispielen gestattet die Beweglichkeit der Endkappen 19 in Verbindung mit den entsprechenden Federgliedern eine selbsttätige Zentrierung des Zwischenstückes 18 des Gehäuses 11, so daß die Rollobahn 16 in der Öffnung des Kofferraumes zentriert ist. Außerdem wird eine klapperfreie Halterung erreicht, weil die beiden Andruckglieder 81 die Nut 76 und die Rippe 71 so gegeneinander vorspannen, daß die Rippe 71 mit ihrer vorderen Seitenfläche 74 an der betreffenden vorderen Fläche 83 der Nut 76 anliegt.

## Patentansprüche

1. Abdeckrollo (1) zum Abdecken des Laderaums (2) von Personenkraftfahrzeugen,
mit einem länglichen aus dem Laderaum (2) zu entnehmenden Gehäuse (11), das ein mit einem Tuchschlitz (13) versehenes Zwischenstück (18) sowie zwei auf dem Zwischenstück (18) sitzende Endstücke (19) trägt,
mit einer in dem Gehäuse (11) drehbar gelagerten Wickelwelle (14),
mit einer an der Wickelwelle (14) befestigten Rollobahn (16), die durch den Auslaufschlitz (13) aus dem Gehäuse (11) ausziehbar ist,
mit einer in dem Gehäuse (11) angeordneten Antriebseinrichtung, durch die die damit gekuppelte Wickelwelle (14) im Sinne des Einfahrens der Rollobahn (16) in Umdrehungen zu versetzen ist,
mit Verriegelungsgliedern (36), die in den Endstücken (19) beweglich gelagert, in Richtung auf eine Verriegelungsstellung mittels Federeinrichtungen (37,89) elastisch vorgespannt sind und wenigstens einen in der Verriegelungsstellung nach außen vorstehenden Verriegelungsfortsatz (38) aufweisen, dadurch gekennzeichnet,
daß beide Endstücke (19) gegenüber dem Zwichenstück (18) des Gehäuses (11) in Richtung parallel zu der Längsachse der Wickelwelle (14) längsverschieblich gelagert, mit Hilfe von zugeordneten Federeinrichtungen (27,33) in Richtung auf eine von dem Zwischenstück (18) wegweisende äußere Endstellung vorgespannt und entgegen der Wirkung der Federeinrichtung (27,33) in eine innere Endstellung überführbar sind.

2. Abdeckrollo nach Anspruch 1, dadurch gekennzeichnet, daß den Endstellungen Anschläge (23,26) zugeordnet sind.

3. Andeckrollo nach Anspruch 1, dadurch gekennzeichnet, daß die Endstücke (19) im wesentlichen spiegelsymmetrisch sind.

4. Abdeckrollo nach Anspruch 1, dadurch gekennzeichnet, daß die Endstücke (19) becherartige Kappen sind, die das Zwischenstück (18) mit ihren Kragen (22) außen übergreifen.

5. Abdeckrollo nach Anspruch 1, dadurch gekennzeichnet, daß sich die Federeinrichtungen (37,89) für die Verriegelungsglieder (36) in den Endstücken (19) abstützen.

6. Abdeckrollo nach Anspruch 1, dadurch gekennzeichnet, daß die Federeinrichtungen (27,33) für die Endstücke (19) in der äußeren Endstellung der Endstücke (19) eine größere Kraft aufbringen als die Federeinrichtungen (37) für die maximal ausgefahrenen Verriegelungsglieder (36).

7. Abdeckrollo nach Anspruch 1, dadurch gekennzeichnet, daß das Zwischenstück (18) Lagereinrichtungen (21) für die Wickelwelle (14) aufweist.

8. Abdeckrollo nach Anspruch 1, dadurch gekennzeichnet, daß die Verriegelungsglieder (36) Verriegelungsschieber sind, die in dem zugehörigen Endstück (19) längsverschieblich gelagert sind.

9. Abdeckrollo nach Anspruch 1, dadurch gekennzeichnet, daß die Verriegelungsglieder (36) Hebel sind, die in dem zugehörigen Endstück schwekbar gelagert sind.

10. Abdeckrollo nach Anspruch 1, dadurch gekennzeichnet, daß die Bewegungsrichtung der Verriegelungsglieder (36) parallel zu der Längsachse der Wickelwelle (14) liegt.

11. Abdeckrollo nach Anspruch 1, dadurch gekennzeichnet, daß die Bewegungsrichtung der Verriegelungsglieder (36) rechtwinkelig zu der Längsachse der Wickelwelle (14) liegt.

12. Abdeckrollo nach Anspruch 1, dadurch gekennzeichnet, daß zur Betätigung des betreffenden Verriegelungsgliedes (36) eine Betätigungseinrichtung (39,43,46,42,59) vorgesehen ist.

13. Abdeckrollo nach Anspruch 12, dadurch gekennzeichnet, daß die Betätigungseinrichtung (39,43,46,42,59) einen in dem Endstück (19) gelagerten Betätigungshebel (43) umfasst, dessen Betätigungsknopf (46) sich außerhalb des Gehäuses (11) befindet.

14. Abdeckrollo nach Anspruch 12, dadurch gekennzeichnet, daß die Betätigungseinrichtung (39,43,46,42,59) eine Kulisse (41,59) aufweist.

15. Abdeckrollo nach Anspruch 14, dadurch gekennzeichnet, daß die Kulisse (39) von einer Fläche (41) einer in dem Verriegelungsglied (36) enthaltenen Öffnung (39) gebildet ist und daß die Fläche (41) schräg zur Bewegungsrichtung des Verriegelungsgliedes (36) liegt.

16. Abdeckrollo nach Anspruch 1, dadurch gekennzeichnet, daß die Kulisse (59) von einem in dem betreffenden Endstück (19) schwenkbar gelagerte Hebel (59) gebildet ist, der eine Öffnung (61) mit einer Schrägfläche (62) aufweist, die schräg zu der Bewegungrichtung des Verriegelungsgliedes (36) liegt, daß an dem Verriegelungsglied (36) ein durch die Öffnung (61) ragender Zapfen (63) sitzt und daß mit dem Hebel (59) ein Betätigungsknopf (46) zusammenwirkt.

## Claims

1. Roller cover (1) for covering the luggage area (2) in automobiles,
with an elongated housing (11) to be removed from the luggage area (2), which supports an intermediate part (18) fitted with a sheet slot (13) as well as two end parts (19) sitting on the intermediate part (18),
with a winding shaft (14) rotatably supported in the housing (11),
with a roller cover sheet (16), which is fastened to the winding shaft (14) and can be drawn out of the housing (11) through the run-out slot (13),
with a drive means, which is disposed in the housing (11) and by means of which the winding shaft (14) coupled thereto may be caused to rotate in the direction of retraction of the rolled cover sheet (16),
with locking members (36), which are movably mounted in the end parts (19), are elastically pre-tensioned towards a locking position by means of spring arrangements (37, 89) and have at least one outwardly projecting locking extension (38) in the locking position, characterised in that
both end parts (19) are mounted to allow longitudinal displacement relative to the intermediate part (18) of the housing (11) in the direction parallel to the longitudinal axis of the winding shaft (14), are pre-tensioned by means of allocated spring arrangements (27, 33) towards an outer end position pointing away from the intermediate part (18) and may be moved into the inner end position against the action of the spring arrangement (27, 33).

2. Roller cover according to Claim 1, characterised in that the stops (23, 36) are allocated to the end positions.

3. Roller cover according to Claim 1, characterised in that the end parts (19) are essentially mirror-symmetric.

4. Roller cover according to Claim 1, characterised in that the end parts (19) are cup-like caps, which engage externally over the intermediate part (18) with their collar (22).

5. Roller cover according to Claim 1, characterised in that the spring arrangements (37, 38) for the locking members (36) are supported in the end parts (19).

6. Roller cover according to Claim 1, characterised in that the spring arrangements (27, 33) for the end parts apply a greater force in the outer end position of the end parts (19) than the spring arrangements (37) for the locking members (36) at maximum extension.

7. Roller cover according to Claim 1, characterised in that the intermediate part (18) has bearing means (21) for the winding shaft (14).

8. Roller cover according to Claim 1, characterised in that the locking members (36) are locking slides, which are mounted to allow longitudinal displacement in the respective end part (19).

9. Roller cover according to Claim 1, characterised in that the locking members (36) are levers which are mounted to swivel in the respective end part.

10. Roller cover according to Claim 1, characterised in that the direction of movement of the locking members (36) is parallel to the longitudinal axis of the winding shaft (14).

11. Roller cover according to Claim 1, characterised in that the direction of movement of the looking members (36) is perpendicular to the longitudinal axis of the winding shaft (14).

12. Roller cover according to Claim 1, characterised in that an operating arrangement (39, 43, 46, 42, 59) is provided for operation of the respective locking member (36).

13. Roller cover according to Claim 12, characterised in that the operating arrangement (39, 43, 46, 42, 59) comprises a control lever (43) disposed in the end part (19), the operating head (46) of which is located outside the housing (11).

14. Roller cover according to Claim 12, characterised in that the operating arrangement (39, 43, 46, 42, 59) comprises connecting link (41, 59).

15. Roller cover according to Claim 14, characterised in that the connecting link (39) is formed by a face (41) of an opening (39) contained in the locking member (36), and that the face (41) lies obliquely to the direction of movement of the locking member (36).

16. Roller cover according to Claim 1, characterised in that the connecting link (59) is formed by a lever (59) arranged to pivot in the respective end part (19), said lever having an opening (61) with an oblique face (62), which lies obliquely to the direction of movement of the locking member (36); that a journal (63) projecting through the opening (61) sits on the locking member (36); and that an operating head (46) cooperates with the lever (59).

## Revendications

1. Cache-bagages à enrouleur (1) pour recouvrir le volume à bagages (2) de voitures automobiles, comprenant
un carter (11) allongé, susceptible d'être retiré du volume à bagages (2) et portant une pièce intermédiaire (18) munie d'une fente de sortie (13) ainsi que deux pièces d'extrémité (19) montées sur la pièce intermédiaire (18),
un arbre enrouleur (14) monté en rotation dans le carter (11),
une bande-cache (16) qui est fixée sur l'arbre enrouleur (14) et peut être extrait du carter (11) à travers la fente de sortie (13),
un dispositif d'entraînement qui est disposé dans le carter (11) et par lequel l'arbre enrouleur (14) couplé avec ce dispositif peut être entraîné en rotation dans le sens de l'enroulement de la bande-cache (16), et
des organes de verrouillage (36) qui sont montés mobiles dans les pièces d'extrémité (19), sont précontraints élastiquement en direction d'une position de verrouillage à l'aide de dispositifs à ressort (37, 89) et présentent au moins un prolongement de verrouillage (38) faisant saillie vers l'extérieur dans la position de verrouillage
caractérisé par le fait que les deux pièces d'extrémité (19) sont montées mobiles en translation longitudinale, suivant une direction parallèle à l'axe longitudinal de l'arbre enrouleur (14), par rapport à la pièce intermédiaire (18) du carter (11), sont précontraintes à l'aide de dispositifs à ressort (27, 33) associés en direction d'une position extrême extérieure éloignée de la pièce intermédiaire (18) et peuvent être amenées à l'encontre de l'action des dispositifs à ressort (27, 33) dans une position extrême intérieure.

2. Cache-bagages à enrouleur suivant la revendication 1, caractérisé par le fait que des butées (23, 26) sont associées aux positions extrêmes.

3. Cache-bagages à enrouleur suivant la revendication 1, caractérisé par le fait que les pièces d'extrémilé (19) sont essentiellement symétriques.

4. Cache-bagages à enrouleur suivant la revendication 1, caractérisé par le fait que les pièces d'extrémité (19) sont des capuchons en forme de godet qui recouvrent la pièce intermédiaire (18) extérieurement à l'aide de leurs jupe (22).

5. Cache-bagages à enrouleur suivant la revendication 1, caractérisé par le fait que les dispositifs à ressort (37,89) pour les organes de verrouillage (36) prennent appui dans les pièces d'extrémité (19).

6. Cache-bagages à enrouleur suivant la revendication 1, caractérisé par le fait que les dispositifs à ressort (27,33) pour les pièces d'extrémité (19) fournissent, dans la position extrême extérieure des pièces d'extrémité (19), une force plus importante que les dispositifs à ressort (37) pour les organes de verrouillage (36) dégagés au maximum.

7. Cache-bagages à enrouleur suivant la revendication 1, caractérisé par le fait que la pièce intermédiaire (18) présente des dispositifs de palier (21) pour l'arbre enrouleur (14).

8. Cache-bagages à enrouleur suivant la revendication 1, caractérisé par le fait que les organes de verrouillage (36) sont des coulisseaux de verrouillage montés mobiles en translation longitudinale dans la pièce d'extrémité (19) associée.

9. Cache-bagages à enrouleur suivant la revendication 1, caractérisé par le fait que les organes de verrouillage (36) sont des leviers montés pivotants dans la pièce d'extrémité associée.

10. Cache-bagages à enrouleur suivant la revendication 1, caractérisé par le fait que la direction de mouvement des organes de verrouillage (36) est parallèle à l'axe longitudinal de l'arbre enrouleur (14).

11. Cache-bagages à enrouleur suivant la revendication 1, caractérisé par le fait que la direction de mouvement des organes de verrouillage (36) est à angle droit par rapport à l'axe longitudinal de l'arbre enrouleur (14).

12. Cache-bagages à enrouleur suivant la revendication 1, caractérisé par le fait qu'un dispositif d'actionnement (39,43,46,42,59) est prévu pour l'actionnement de l'organe de verrouillage (36) correspondant.

13. Cache-bagages à enrouleur suivant la revendication 12, caractérisé par le fait que le dispositif d'actionnement (39,43,46,42,59) comprend un levier d'actionnement (43) qui est monté dans la pièce d'extrémité (19) et dont le bouton d'actionnement (46) se trouve à l'extérieur du carter (11).

14. Cache-bagages à enrouleur suivant la revendication 12, caractérisé par le fait que le dispositif d'actionnement (39,43,46,42,59) présence une coulisse (41,59).

15. Cache-bagages à enrouleur suivant la revendication 14, caractérisé par le fait que la coulisse (49) est formée par une face (41) d'une ouverture (39) ménagée dans l'organe de verrouillage (36) et que ladite face (41) est orientée de façon oblique par rapport à la direction de mouvement de l'organe de verrouillage (36).

16. Cache-bagages à enrouleur suivant la revendication 1, caractérisé par le fait que la coulisse (59) est constituée par un levier (59) qui est monté pivotant dans la pièce d'extrémité (19) correspondante et qui présente une ouverture (61) avec une face oblique (62) orientée de façon oblique par rapport à la direction de mouvement de l'organe de verrouillage (36), que l'organe de verrouillage (36) porte un doigt (63) pénétrant dans ladite ouverture (61) et qu'un bouton d'actionnement (46) coopère avec le levier (59).
